# EUROPÄISCHE PATENTSCHRIFT

(11) **EP 2 673 820 B1**
(45) Veröffentlichungstag und Bekanntmachung des Hinweises auf die Patenterteilung: **21.06.2017**
(21) Anmeldenummer: 12703512.9
(22) Anmeldetag: 07.02.2012
(51) Int. Cl.: H01M 2/14, H01M 2/16, H01M 2/18, H01M 8/1065, C25B 13/02, H01M 10/0565

(54) **IONENLEITENDER FESTKÖRPERSEPARATOR**
ION CONDUCTING SOLIDSTATE SEPARATOR
CONDUCTEUR D'IONS SOLIDE

(30) Priorität: 08.02.2011 DE 102011003746
(43) Veröffentlichungstag der Anmeldung: 18.12.2013
(73) Patentinhaber: Fraunhofer-Gesellschaft zur Förderung der angewandten Forschung e.V., 80686 München (DE)
(72) Erfinder: BERGER, Thomas, 76327 Pfinztal (DE); HAGEN, Markus, 76709 Kronau (DE)
(74) Vertreter: Maiwald Patentanwalts GmbH
(86) Internationale Anmeldenummer: PCT/EP2012/052007
(87) Internationale Veröffentlichungsnummer: WO 2012/107425

(56) Entgegenhaltungen:
- EP-A1- 1 689 014
- WO-A1-2007/020242
- DE-A1-102007 053 739
- US-A1- 2011 294 031

## Beschreibung

Die vorliegende Erfindung betrifft einen neuartigen Festkörperseparator für elektrochemische Systeme sowie deren Verwendung.

In elektrochemischen Systemen müssen in den allermeisten Fällen mindestens zwei Elektroden, an denen elektrochemische Reaktionen ablaufen, elektronisch isolierend voneinander getrennt werden. Für einen Ladungsausgleich während der elektrochemischen Reaktionen an den Elektroden ist es notwendig, dass Ionen zwischen den Elektroden wandern können, die Elektroden aber elektronisch voneinander getrennt sind, um einen Kurzschluss zu verhindern. Abhängig vom elektrochemischen System können dies Anionen, Kationen oder beides gleichzeitig sein. Um eine Trennung in elektrochemischen Systemen herbeizuführen werden sogenannte Separatoren eingesetzt.

Ein Ionentransport innerhalb eines elektrochemischen Systems kann auf verschiedene Arten realisiert werden. Prinzipiell liegen folgende Mechanismen zu Grunde:
- Mindestens eine ionische Verbindung (Salz) liegt im schmelzflüssigen Zustand vor und ist dabei mindestens zum Teil dissoziiert. So liegt zum Beispiel bei der Aluminiumherstellung ein schmelzflüssiges Gemisch aus Aluminiumoxid und Kryolith als elektronisch isolierende Separationsschicht zwischen der Kohlekathode und der Aluminiumanode vor. Dabei hat das Gemisch eine Zusammensetzung nahe dem eutektischen Punkt. Salze mit einem besonders niedrigen Schmelzpunkt sind ionische Liquide, in denen z.T. höher schmelzende Salze gelöst werden können.
- Mindestens eine ionische Verbindung (Salz) ist in einem Lösungsmittel gelöst und ist dabei mindestens zum Teil dissoziiert. Als Beispiel sei der LithiumIonen-Akkumulator genannt bei dem ein Lithiumsalz (z.B. LiPF₆) in einem Gemisch organischer Carbonate (z.B. EC/DMC) dissoziativ gelöst ist. Die solvatisierten Lithiumionen können während der Ladung/Entladung des Akkumulators zwischen Anode und Kathode wandern.
- Das Gegenion der wandernden Spezies ist an einem Gerüst fixiert. So werden in Polymerelektrolytmembranbrennstoffzellen (polymer electrolyte membrane fuel cell PEM-FC) Kationenaustauschermembranen verwendet. In diesen Kationenaustauschermembranen sind die Anionen (z.B. Sulfonsäuregruppen) chemisch an ein Gerüstpolymer (z.B. PTFE) gebunden und können deshalb nicht wandern. Für einen ausreichenden Transport der Protonen durch die Membran sollten diese solvatisiert vorliegen, wobei die Solvathülle zusammen mit den Protonen durch die Membran transportiert wird (electro osmotic drag).
- Ionenleitung durch einen Festkörper. Als Beispiel sei hier die Na/S-Batteriezelle genannt bei der zwischen der schmelzflüssigen Natriumelektrode und der Schwefelelektrode als Separationsschicht ein Sinterkörper aus β"-Al₂O₃ verwendet wird. β"-Al₂O₃ ist eine elektronisch isolierende Schichtverbindung, durch die Natriumionen in der Schichtebene wandern können. Im Fall der Na/S-Batteriezelle werden Schwefel / Natriumpolysulfide vollständig vom Natrium ferngehalten und dadurch eine direkte chemische Reaktion dieser Stoffe verhindert. Festionenleiter sind meist hochselektiv (Wanderung nur einer Ionenart) und lassen den Transport unsolvatisierter Ionen zu.

Im Gegensatz zu Sensorsystemen (evtl. auch bei elektrochromen Systemen) in denen meist nur sehr geringe, flächenbezogene Stromdichten im Separationsmaterial wirken, werden für elektrochemische Energiewandlersysteme große, flächenbezogene Stromdichten bei möglichst geringen Energieverlusten gefordert. Daraus, und aus produktionstechnischer Sicht, ergeben sich folgende, allgemeingültige Anforderungen an die Separation für elektrochemische Energiewandlersysteme:
- Hohe Ionenleitfähigkeit für die wandernde Spezies bei gleichzeitig möglichst unendlich hohem elektronischem Widerstand, um einen Kurzschluss im System zu unterbinden.
- Hohe Selektivität bezüglich der wandernden Spezies. Die Überführungszahl für die wandernde Spezies sollte möglichst 1 sein, um Konzentrationspolarisation in dem System zu verhindern.
- Möglichst geringe Dicke der Separation, um die Energieverluste aufgrund des IR-drop, verursacht durch die Ionenwanderung, möglichst gering zu halten.
- Hohe mechanische Festigkeit der Separation, um eine Penetration der Separation während der Assemblierung und während des Betriebes der elektrochemischen Wandlerzelle zu vermeiden.
- Leichte Verarbeitbarkeit des Separators. Z.B. können flächige, dünne Schichten aus gesintertem Keramikmaterial oder Gläser/Glaskeramiken nur sehr bedingt verarbeitet werden, da aufgrund des spröden Charakters diese Materialien leicht brechen.
- Chemische Stabilität gegenüber den Medien, die mit dem Separationsmaterial in Kontakt kommen.
- Große thermische Stabilität, um im Fall einer Überhitzung die Ausbildung eines internen Kurzschlusses zu vermeiden.

Derzeit eingesetzte Separatoren erfüllen jeweils nur einen Teil der gewünschten Eigenschaften. An zwei Beispielen werden exemplarisch die Eigenschaften der Separationsmaterialien mit ihren Vor- und Nachteilen vorgestellt:

### Polyolefinseperatoren für Li-Ionen-Zellen:

Die derzeit üblichen Separatormaterialien für Li-Ionen-Zellen sind poröse, hydrophilisierte Polymerfilme aus Polyethylen, Polypropylen oder Kombinationen aus diesem Polymeren. Das Separatormaterial ist mit einer Elektrolytlösung gefüllt, in der der Ionentransport zwischen den Elektrodenmaterialien erfolgt. Übliche Elektrolytlösungen sind Mischungen aus organischen Carbonaten, z.T. mit einem geringen Anteil an organischen Additiven (Deckschichtbildner), in denen ein Lithiumleitsalz gelöst ist (z.B. LiPF₆). Das Separatormaterial ist selbst an der Ionenleitung nicht beteiligt und dient lediglich als elektronisch isolierender Abstandhalter zwischen den Elektroden. Das Reduktionspotential von lithiiertem Graphit, dem derzeit üblichen Anodenmaterial im geladenen Zustand einer Li-Ionen-Zelle, ist so negativ, dass die eingesetzten organischen Verbindungen der Elektrolytlösung thermodynamisch nicht stabil sind und deshalb Teile der Elektrolytlösung während des ersten Aufladens einer Li-Ionen-Zelle (Formierung) auf der Oberfläche der Graphitpartikel zu einem dünnen Polymerfilm reduziert werden (SEI = solid electrolyte interface). Die SEI ist elektronisch isolierend und verhindert dadurch eine weitere Reduktion der organischen Bestandteile der Elektrolytlösung schon bei sehr geringer Schichtdicke. Zusätzlich ist die SEI Lithiumionenleitend und erlaubt deshalb einen Transfer von Lithiumionen zwischen dem Graphit und der Elektrolytlösung. Günstige Eigenschaften dieser Systeme sind ihr sehr dünner Aufbau (bis zu 9 µm), ihre relativ hohe mechanische Festigkeit, ihre leichte Verarbeitbarkeit und ihre relativ hohe Ionenleitfähigkeit. Nachteile solcher Separationsmaterialien sind geringe thermische Stabilität (Polyolefine haben einen Schmelzpunkt unter 200°C), keine thermodynamische Stabilität der Elektrolytlösung gegenüber lithiiertem Graphit und eine Überführungszahl der Li⁺-Ionen <1.

### β"-Al₂O₃ -Sinterkeramikrohre für Na/S-Batteriezellen:

Na/S-Batteriezellen zählen zu den Hochtemperatur Akkumulatoren, in denen das aktive Anodenmaterial geschmolzenes Natrium ist. Dieses steht in direktem Kontakt zu einem β"-Al₂O₃Sinterkeramikrohr (Separator), das elektronisch isolierend und Natriumionenleitend ist, und die Separation zum Katholytenraum der Zelle bildet. Im Katholytenraum liegt das aktive Kathodenmaterial (Schwefel und Natriumpolysulfide) schmelzflüssig vor und steht ebenfalls in direktem Kontakt zum Separator. Damit ergeben sich als günstige Eigenschaften für den Separator thermodynamische Stabilität sowohl gegenüber flüssigem Natrium als auch gegen Schwefel und Natriumpolysulfide, hohe Selektivität für Na⁺-Leitfähigkeit, große thermische Stabilität, relativ hohe spezifische Ionenleitfähigkeit, besonders bei hohen Temperaturen und hohe mechanische Festigkeit der polykristallinen Sinterkeramik. Als Nachteile solch eines Separators sind große Separationsschichtdicken und sehr beschränkte Verarbeitungsmöglichkeiten für sehr dünne, flächige Sinterfolien, wobei schon geringe Biegebeanspruchung zum Bruch einer dünnen Sinterkeramikfolie führt, zu nennen.

DE 102007053739 A1 beschreibt eine Membrananordnung zur Steuerung des Wasserhaushalts von Brennstoffzellen, wobei die Membrananordnung ionenleitende und protonenleitende Bereiche aufweist, welche alternierend angeordnet sein können und durch einen isolierenden Separator vollständig voneinander getrennt werden.

Aufgabe der vorliegenden Erfindung ist es demnach einen Festkörperseparator für elektrochemische Systeme bereitzustellen, der die Vorteile der bekannten Separatoren vereint und deren Nachteile vermeidet. Es ist insbesondere Aufgabe der vorliegenden Erfindung die Vorteile von Festkörperseparatoren und Polyolefinseparatoren zu vereinigen, d.h. hohe thermische Beständigkeit, hohe mechanische Festigkeit, hohe spezifische Ionenleitfähigkeit, hohe Selektivität der Ionenleitung, große chemische Stabilität, geringe Separatordicke und leichte Verarbeitbarkeit.

Es wurde versucht aus ionenleitenden Festkörpern kleine Segmente herzustellen und diese mittels duktilen, elektrisch isolierenden Materialien zu verbinden und damit einen Festkörperseparator in gewünschter Form und Größe aufzubauen

Die vorliegende Erfindung richtet sich auf einen Festkörperseparator für elektrochemische Systeme, wobei der Festkörperseparator aus einer Vielzahl von ionenleitenden Festkörpersegmenten besteht, die miteinander verzahnt sind und die einzelnen Festkörpersegmente mittels eines verformbaren, insbesondere duktilen, elektrisch isolierenden Materials verbunden sind.

Die erfindungsgemäßen Festkörperseparatoren zeichnen sich durch viele positive Eigenschaften aus. So können die erfindungsgemäßen Festkörperseparatoren sehr dünn und in beliebiger Form ausgeführt werden. Darüber hinaus ermöglicht die Verwendung von duktilen Materialen, dass die Festkörperseparatoren in Vorrichtungen eingesetzt werden können, die u. A. durch Wickeln erhalten werden (z.B. in Rundzellen). D.h. die erfindungsgemäßen Festkörperseparatoren sind biegsam und flexibel. Des Weiteren sind sie ionenselektiv, in Abhängigkeit vom elektrisch isolierenden Material temperaturstabil und nicht brennbar und bilden bei Erhitzen keine Dämpfe, wie dies z.B. bei organischen flüssigen Elektrolyten der Fall ist. Selbstentladeprozesse, die in der Diffusion einer Spezies zwischen Anode und Kathode begründet sind, werden durch den Festkörperseparator unterbunden.

Der Ausdruck "Duktilität" (oder "duktil") nach vorliegender Erfindung wird als eine Materialeigenschaft verstanden, die es dem Material erlaubt sich unter (mechanischer) Beanspruchung zu dehnen und zu strecken.

Demnach ist in vorliegender Erfindung ein elektrisch isolierendes Material entweder ein Klebstoff, ein Polymer, eine organische oder anorganische Flüssigkeit, z.B. ionische Flüssigkeiten, ein Gel, sowie jedwede Kombination der genannten Stoffklassen. Bevorzugt finden Klebstoffe Verwendung.

Ein Klebstoff nach vorliegender Erfindung wird ein nichtmetallischer Werkstoff verstanden der Fügeteile durch Flächenhaftung (Adhäsion) und/oder innere Festigkeit (Kohäsion) verbinden kann (nach DIN EN 923). Besonders bevorzugte Klebstoffe sind ausgewählt aus Gruppe bestehend aus Methylmethacrylat-Klebstoffe, strahlenhärtende Klebstoffe, Phenol-Formalkedhydharz-Klebstoffe, Silikone, Silanvernetzende Polymerklebstoffe, Epoxidharz-Klebstoffe, und PolyurethanKlebstoffe. In einer besonders bevorzugten Ausführungsform werden Silikone eingesetzt.

Die Polymere können sowohl thermoplastisch als auch duroplastisch sein. Die Verbindung der einzelnen Festkörpersegmente kann dabei durch Einbringen der Polymere zwischen die Festkörpersegmente mittels verschiedener Verfahren erfolgen:
- über den schmelzflüssigen Zustand
- über eine Polymerlösung und anschließendes Entfernen des Lösungsmittels z.B. durch Verdunstung
- über eine Suspension von Polymerpartikeln mit anschließender Versinterung oder Aufschmelzen der Partikel
- über Polymer-Oligomere, die anschließend vernetzt werden:

Besonders bevorzugte Polymere sind thermoplastische Polymere, insbesondere thermoplastische Polymere ausgewählt aus der Gruppe bestehend aus Polypropylen, Polyethylen, wie ultrahochmolekulares Polyethylen (UHMW-PE), Polyethylenterephthalat (PET), Polyamid (PA), Polyvinylidenfluorid (PvdF), Hexafluoropropylen (HFP), Polytetrafluorethylen (PTFE), Polystyrol (PS), Polymethylmethacrylat (PMMA), Polybenzimidazol (PBI), Polyvinylchlorid (PVC) und Copolymere aus den genannten.

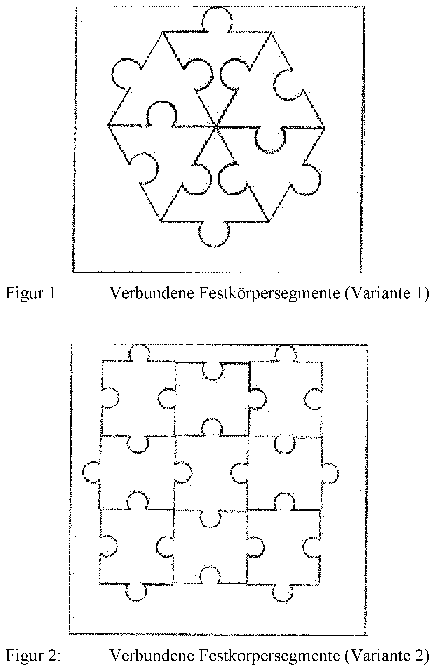

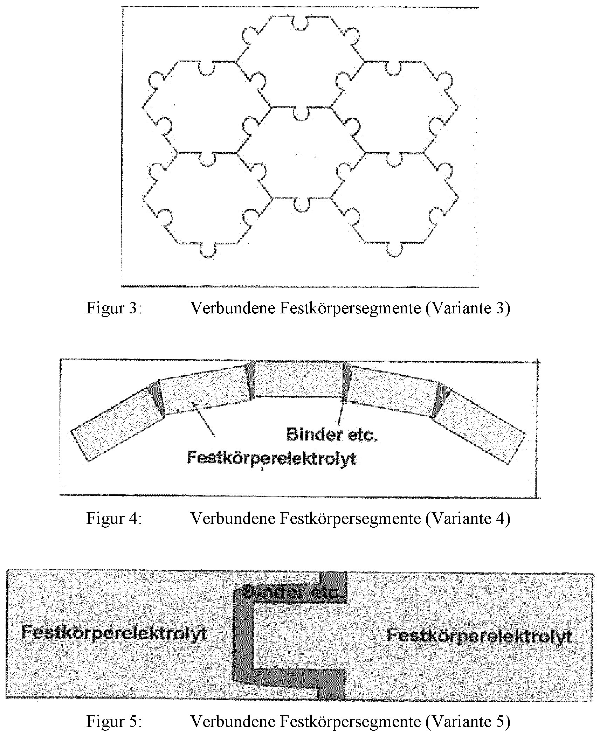

Als organische oder anorganische Flüssigkeiten, können alle Verbindungen eingesetzt werden, die in der Lage sind, die Randbereiche der einzelnen Festkörpersegmente zu benetzen. Dabei kann es von Vorteil sein, die Randbereiche der Festkörpersegmente mit einem Material zu Beschichten, das von der Flüssigkeit wesentlich besser benetzt wird, als der Festkörper selbst. Der Zusammenhalt der Segmente untereinander kann für diesen Fall durch eine mechanische Verzahnung der Segmente, wie weiter unten ausführlich beschrieben, verbessert werden. Beispielhafte Ausführungsformen für mechanische Verzahnungen in diesem speziellen Fall sind unter Anderem in Fig. 1 bis Fig. 3 dargestellt. Die organische oder anorganische Flüssigkeit füllt dabei nur den Spalt zwischen den einzelnen Festkörpersegmenten, gewährleistet dabei eine geringfügige Beweglichkeit der Segmente untereinander und trennt gleichzeitig die gegenüberliegenden Oberflächen des Separatormaterials. Die Flüssigkeit sollte dabei vorzugsweise folgende Voraussetzungen erfüllen:
- keine chemische Reaktion in Kontakt mit dem, den Anolyten- bzw. Katholytenraum, füllenden Medium
- sehr geringer Dampfdruck um ein Verdunsten der Flüssigkeit zu vermeiden (besonders bevorzugt sind deshalb ionische Liquide)
- keine Mischbarkeit mit dem, den Anolyten- bzw. Katholytenraum, füllenden Medium

Die Festkörpersegmente können auch durch ein Gel miteinander verbunden werden. Für das Gel gelten die gleichen Bedingungen wie bei den Flüssigkeiten beschrieben.

Unter ionischen Flüssigkeiten werden insbesondere Salze verstanden, die bei Temperaturen unter 100°C flüssig sind. Bevorzugt werden ionische Flüssigkeiten ausgewählt aus der Gruppe bestehend aus Imidazolium-Verbindungen, Pyridinium-Verbindungen, Pyrolidonium-Verbindungen, Tetraalkylammonium-Verbindungen, Piperidinium-Verbindungen und deren Gemische.

Für die ionischen Flüssigkeiten gelten vorzugsweise die gleichen Voraussetzungen wie für die Verwendung von organischen oder anorganischen Flüssigkeiten zum Trennen des Anolyten- vom Katholytenraum:
- die ionischen Flüssigkeiten sollten nicht mischbar mit dem, den Anolyten- bzw. Katholytenraum, füllenden Medium sein,
- die mechanische Verbindung der Segmente erfolgt vorzugsweise über eine Verzahnung der Segmente,
- keine chemische Reaktion der ionischen Flüssigkeit mit dem, den Anolyten- bzw. Katholytenraum, füllenden Medium.

Insbesondere der geringe Dampfdruck der ionischen Flüssigkeiten macht sie als elektrisch isolierendes Material sehr geeignet, da diese praktisch nicht verdunsten.

Bei den ionenleitenden Festkörpersegmenten handelt es sich um Materialien, die sich als geeignete Separatormaterialien erwiesen haben. Dementsprechend werden die ionenleitenden Festkörpersegmente ausgewählt aus der Gruppe bestehend aus Keramiken, Glaskeramiken, polymere Festelektrolyte, Einkristalle und Mischung daraus. Als besonders geeignet haben sich folgende Verbindungen erwiesen:
- Li₂O-Al₂O₃-SiO₂-P₂O₅-TiO₂-GeO₂: Li⁺-leitende Glaskeramik
- β-Aluminiumoxid: Leitung für unterschiedliche Ionen möglich (z.B. Li⁺, Na⁺, K⁺, Ag⁺, H₃O⁺, Tl⁺, Rb⁺, Pb²⁺, Ba⁺); besonders hohe Leitfähigkeit für Na⁺
- β"-Aluminiumoxid: Leitung für unterschiedliche Ionen möglich (z.B. Li⁺, Na⁺, K⁺, Ag⁺, H₃O⁺, Tl⁺, Rb⁺, Pb²⁺, Ba⁺); besonders hohe Leitfähigkeit für Na⁺
- Cu₁₆Rb₄I₇Cl₁₃: Cu⁺-Ionenleitung
- H₃Mo₁₂PO₄₀*30H₂O: Protonenleitend
- La_{0.95}Sr_{0.05}F_{2.95} und LaF₃: F⁻Ionenleitend
- Ag₄RbI₅: Ag⁺-Ionenleitend
- Li_{1.3}Al_{0.3}Ti_{1.7}(PO₄)₃ : Li⁺-Ionenleitend
- Li_{0.34}La_{0.51}TiO_{2.94} : Li⁺-Ionenleitend
- NASICON (Sodium Super-Ionic Conductor): Na⁺-Ionenleitend
- LISICON (LIthium SuperIonic Conductor): Li⁺-Ionenleitend
Die beschriebenen ionenleitenden Festkörpersegmente sind deutlich kleiner dimensioniert, als die entsprechenden bekannten Sinterkörper aus dem ionenleitenden Festkörper, wie z.B. die einseitig geschlossenen Rohre in Natrium/Schwefel und der ZEBRA Batterie. Die ionenleitenden Festkörpersegmente sind vorzugsweise dünne, plättchenförmige Segmente. Folglich ist es bevorzugt, dass die ionenleitenden Festkörpersegmente einen mittleren Durchmesser von nicht mehr als 100 mm, d.h. von 0,01 bis 100,0 mm, insbesondere nicht mehr als 10 mm, d.h. von 0,01 bis 10,0 mm, besonders bevorzugt von 2 mm, d.h. von 0,1 bis 2,0 mm, haben. Bei Wickelzellen liegt der besonders bevorzugte Durchmesser unterhalb von 1 mm, d.h. von 0,1 bis weniger als 1,0 mm. Des Weiteren ist es bevorzugt, dass die ionenleitenden Festkörpersegmente eine Dicke von nicht mehr als 1,0 mm, d.h. von 0,005 bis 1,0 mm, insbesondere von nicht mehr als 0,5 mm, d.h. von 0,005 bis 0,5 mm, besonders bevorzugt von nicht mehr als 0,02 mm, d.h. von 0,005 bis 0,02 mm, haben.
Vorzugsweise sind die ionenleitenden Festkörpersegmente so ausgebildet, dass eine möglichst große Flächenbedeckung erreicht werden kann (z.B. Schachbrettmuster, Bienenwabenmuster oder ähnliche Strukturen) und erfindungsgemäß miteinander verzahnt. Denkbar ist demnach, dass die ionenleitenden Festkörpersegmente rund, dreieckig, viereckig oder wabenförmig ausgebildete sind. Der Zusammenhalt der einzelnen Segmente wird hierbei durch das elektrisch isolierende Material zwischen den Segmenten sowie die Verzahnung bewirkt. Erfindungsgemäß beansprucht sind Geometrien, die miteinander verzahnen und so eine formschlüssige Verbindung bewirken (z.B. Zusammenhalt von Puzzleteilen). In einer besonderen Ausführungsform sind die ionenleitenden Festkörpersegmente daher dreieckig, viereckig oder wabenförmig, wobei diese Segmente zusätzlich puzzelformartig ausgestaltet sind (siehe Abbildungen 1 bis 5). In diesem Fall braucht das elektronisch isolierende Material zwischen den Segmenten keine mechanische Festigkeit haben und kann z.B. aus einer Flüssigkeit, wie z.B. einer ionischen Flüssigkeit, oder einem Gel bestehen.

Um optimale Stabilität und Flexibilität des Festkörperseparators zu gewährleisten ist es bevorzugt, dass das elektrisch isolierenden Material zwischen den Fugen und/oder Führungen der ionenleitenden Festkörpersegmente vorliegt und somit auf der einen Seite eine optimale Bindung zwischen Segmenten gewährleistet und auf der anderen Seite eine hohe Flexibilität ermöglicht.

Aus den oben gemachten Ausführungen ergibt sich insbesondere, dass der volumenmäßige Hauptanteil in dem Festkörperseparator den ionenleitenden Festkörpersegmente zuzurechnen ist. Folglich ist es bevorzugt, dass das elektrisch isolierende Material nicht mehr als 50 Vol.-%, insbesondere nicht mehr als 15 Vol.-%, des Festkörperseparators ausmacht.

Die Dimensionen des Festkörperseparators nach vorliegender Erfindung hängen stark von seinem Einsatzgebiet ab. Jedoch ist bevorzugt, dass der Festkörperseparator eine Dicke von 0,02 bis 1,0 mm, bevorzugt eine Dicke von von 0,02 bis 0,5 mm, und eine Breite von 20 cm bis 200 cm hat. Durch einen kontinuierlichen Herstellungsprozess kann der Separator als Endlosware hergestellt werden.

Der erfindungsgemäße Festkörperseparator kann in beliebigen elektrochemischen Systemen Einsatz finden. Folglich richtet sich die vorliegende Anmeldung auch auf die Verwendung eines Festkörperseparator wie in dieser Erfindung beschrieben für den Einsatz in Vorrichtungen ausgewählt aus der Gruppe bestehend aus Sensoren, elektrochromen Systemen, Brennstoffzellen, primäre Batteriezellen, sekundäre Batteriezellen, Redox-Flow Systemen, elektrochemische Synthesevorrichtungen und Elektrolyseuren. Insbesondere richtet sich die vorliegende Erfindung auf die Verwendung des erfindungsgemäßen Festkörperseparators in elektrochemischen Energiewandlersystemen, wie z.B. in sekundäre Batteriezellen oder Brennstoffzellen.

Darüber hinaus richtet sich die vorliegende Erfindung auch auf Sensoren, elektrochromen Systemen, Brennstoffzellen, primäre Batteriezellen, sekundäre Batteriezellen, Redox-Flow Systemen, oder Elektrolyseuren umfassend den erfindungsgemäßen Festkörperseparator, insbesondere richtet sich die vorliegende Erfindung auf elektrochemischen Energiewandlersysteme, wie z.B. auf Batteriezellen oder Brennstoffzellen, umfassend den erfindungsgemäßen Festkörperseparator.

Die Herstellung der erfindungsgemäßen Festkörperseparatoren umfasst die Schritte
(a) Herstellung der ionenleitenden Festkörpersegmente und
(b) Verbinden der ionenleitenden Festkörpersegmente mittels elektrisch isolierendem Material.

Die Herstellung der ionenleitenden Festkörpersegmente kann aus Pulvern erfolgen, die in eine Form eingebracht werden und anschließend zum ionenleitenden Festkörpersegment verfestigt werden. Alternativ können dünne Schichten, bzw. Filme aus Schmelzen hergestellt werden, aus denen anschließend die ionenleitenden Festkörpersegmente herausgearbeitet werden. Im Folgenden werden für die entsprechenden Materialien bevorzugte Verfahren aufgezeigt.

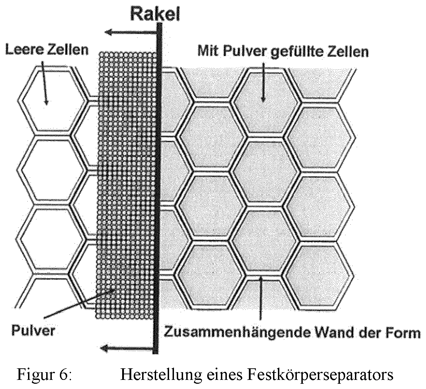

In Fall von ionenleitenden polykristallinen Festkörpersegmenten werden vorzugsweise Pulver eingesetzt. Dabei dürfen die größten Partikel des Pulvers nicht größer sein als die Dicke des Festkörpersegmentes und die Korngrößenverteilung der Partikel sollte sehr breit sein, um eine hohe Schüttdichte zu erreichen. Durch eine hohe Schüttdichte ist die Schrumpfung zu einem dichten Sinterkörper gering und es werden die besten Ergebnisse bezüglich der mechanischen Stabilität und der spezifischen Leitfähigkeit für den Sinterkörper erzielt. Für die gleichzeitige Herstellung vieler polykristalliner Segmente wird in einem ersten Schritt eine Form, die aus vielen Einheiten der Segmente aufgebaut ist, mit dem Pulver gefüllt (Figur 6). Die Befüllung kann durch das Einstreichen im Trockenen oder einer Paste erfolgen. Auch alle anderen Techniken zum Füllen der Form, wie z.B. Tauchen in eine Suspension, Elektrophorese, etc., können angewendet werden.

Im zweiten Schritt wird das Pulver stark verdichtet, um eine möglichst geringe Porosität der Segment-Grünlinge zu erhalten. Das Verdichten kann entweder über statisches oder isostatisches Pressen erfolgen. Im Fall der elektrophoretischen Abscheidung der Partikel in die Form werden, durch den Prozess bedingt, schon bei der Füllung sehr dichte Grünlinge erhalten, die nicht mehr nachverdichtet werden müssen.

In einem dritten Schritt werden die Grünlinge zu dichten (d.h. sehr geringe bis keine Porosität) polykristallinen Segmenten versintert. Das Sintern kann entweder in der Form für die Herstellung der Grünlinge erfolgen, oder die Grünlinge werden erst auf eine eben Platte überführt, auf der anschließend der Sinterprozess ausgeführt wird.

Eine weitere Methode besteht in der Herstellung einer Grünlingsfolie auf einem Trägermaterial. Die Beschichtung der Trägerfolie kann durch alle üblichen Verfahren wie Rakeln, Breitschlitzdüse oder roll-to-roll erfolgen. Aus dieser beschichteten Folie wird anschließend, z.B. mit einem Stanzwerkzeug, gleichzeitig eine Vielzahl der Grünlingssegmente ausgestanzt. Dieser Prozess ist vergleichbar mit dem Ausstanzen eines Puzzles aus einem Karton und ist auch für diese spezielle Ausführungsform der Segmente besonders geeignet (Figur 1 bis Figur 3). Auch andere Trennverfahren wie Laserschneiden oder Wasserstrahlschneiden können angewendet werden. Im letzten Schritt werden die Segmente wieder gesintert.

Anstelle polykristalliner Keramik können die Segmente auch als Glaskeramik ausgeführt sein. Der Unterschied besteht hauptsächlich darin, dass bei Glaskeramiken die Korngrenzen kristalliner Partikel mit einer amorphen Glasphase miteinander verbunden sind. Die Eigenschaften einer Glaskeramik werden im Wesentlichen durch die Temperaturführung beim Schmelzen der einzelnen Komponenten und dem anschließenden Abkühlprozess bestimmt. Die Herstellung der Grünlinge für die Segmente kann in gleicher Weise erfolgen, wie sie für die polykristallinen Sinterkörper beschrieben sind. Der abschließende Sinterprozess wird durch geeignete Temperaturführung so gestaltet, dass Glaskeramiksegmente erhalten werden.

Eine weitere Herstellungsvariante besteht darin in einem ersten Schritt aus einer Glasschmelze einen dünnen Film zu ziehen und aus diesem Film bei einer Temperatur nahe dem Erweichungspunkt des Glases die Segmente mit einem Stanzwerkzeug auszustanzen. Dieses Verfahren ist besonders geeignet für verzahnte Strukturen (z.B. Puzzel). Durch geeignete Temperaturführung während der Abkühlung scheiden sich kristalline Phasen in den Glasfilmsegmenten aus und es entstehen Segmente bestehend aus der gewünschten Glaskeramik.

In Abhängigkeit von der Kristallstruktur ist eine Ionenleitung nicht in alle Raumrichtungen vorhanden. So ist sie z.B. in Spinellen (z.B. LiMn₂O₄) in allen drei Raumrichtungen gegeben, in Schichtstrukturen (z.B. NaFeO₂) nur in x- und y Achse und in Olivinstrukturen (z.B. LiFePO₄) nur in einer Achse möglich. Besonders für Festionenleiter mit anisotroper Ionenleitung ist es deshalb besonders vorteilhaft die Segmente aus Einkristallen herzustellen und die Kristallachse dabei so auszurichten, dass die Ionenleitfähigkeit von der einen auf die andere Fläche besonders groß ist. Eine Möglichkeit ist, aus einer Schmelze einen Einkristallstab mit einer günstigen Ausrichtung der Gitterachsen zu ziehen und diesen Stab in dünne Scheiben zu schneiden (analog der Si-Waferherstellung). Aus diesen Platten können durch geeignete Trennverfahren, wie z.B. Laserschneiden, Wasserstrahlschneiden oder Drahtsägen die Segmente hergestellt werden.

Eine weitere Variante besteht darin, in einem ersten Schritt viele Einkristalle herzustellen, aus denen die Segmente gebildet werden. Die Einkristalle können z.B. aus einer Schmelze oder Lösung gezüchtet werden, wobei durch Impfen mit Kristallisationskeimen und einer gesteuerten Abkühlung der Schmelze/Lösung die Anzahl und Größe der Einkristalle beeinflusst werden kann. Die Kristallgrößenverteilung kann in engen Grenzen gehalten werden und durch Sieben zusätzlich weiter eingeschränkt werden. Je nach Kristallstruktur können die Kristalle selbst als Segmente verwendet werden. Z.B. können Kristalle mit Kochsalzstruktur Würfel sein, die bei gleicher Größe zu einem Schachbrettmuster mit hoher Flächenbedeckung angeordnet werden können. Kristalle mit ungünstiger geometrischer Struktur können in einer Trommelmühle mit Sieb zu Kugeln gleicher Größe bearbeitet werden, die in einlagiger, dichtester Packung zu einer Bienenwabenähnlichen Struktur angeordnet werden können.

Der zweite Herstellungsschritt besteht in der Anordnung der Kristalle oder Kristallkugeln zu einer einlagigen Schicht mit hoher Flächenbedeckung. Dafür werden die Kristalle auf einer ebenen Platte oder einem Flüssigkeitsfilm höherer spezifischer Dichte (z.B. einem Quecksilberschicht) geschüttet und die begrenzenden Seitenflächen so weit zum Zentrum der Platte / des Metallbades verschoben, bis sich die gewünschte Anordnung der Segmente eingestellt hat. Dabei ist es von Vorteil, die Platte / das Metallbad in Vibration zu versetzen um ein leichte Beweglichkeit der Kristalle oder der Kristallkugeln zu bewirken. Bei Festkörperelektrolyten mit anisotroper Ionenleitung besteht zusätzlich eine Anisotropie der Permitivität, das bedeutet, dass die Kristalle oder Kristallkugeln, durch gleichzeitiges Einwirken eines starken elektrischen Feldes während der Anordnung zu einer Fläche, bezüglich ihrer Orientierung ausgerichtet werden können.

Der dritte Herstellungsschritt besteht in dem Verbinden der Kristalle/Kristallkugeln zu einem flächigen Verbund. Da eine mechanische Verzahnung in diesem Fall nicht möglich ist, können als Verbindungsmaterial nur Polymere eingesetzt werden. Die entsprechenden Techniken sind im nächsten Abschnitt beschrieben.

Die Außenabmessungen der Kristalle bzw. der Durchmesser der Kristallkugeln ist bevorzugt zwischen 0,5 und 5 mm. Damit ergibt sich eine Dicke des Festkörperseparators nach dem Verbinden der Kristalle / Kristallkugeln in der gleichen Größenordnung und ist für die meisten Anwendungen ca. eine Größenordnung zu groß. Das Material wird deshalb in einem vierten Herstellungsschritt in der Dicke reduziert. Dazu ist es vorteilhaft die Verbindung der Kristalle/Kristallkugeln auf einem Trägermaterial (z.B. einem Metallband) herzustellen oder das verbundene Material auf einen Träger zu kleben. Von der Oberfläche wird soviel Material abgetragen, dass die Hälfte der ursprünglichen Dicke plus der Hälfte der endgültigen Dicke des Festkörperseparators auf dem Trägermaterial zurückbleibt. Anschließend wird die bearbeitete Seite mit einem weiteren Träger verklebt und das erste Trägermaterial wieder entfernt. Von der jetzt zugänglichen Seite wird in gleicher Weise soviel Material abgetragen, dass die endgültige Separatorstärke erhalten wird und anschließend das Trägermaterial vom Festkörperseparator abgezogen wird. Zum Materialabtrag können Verfahren wie Schleifen, Sand(Kugel)-strahlen, Ionenstrahlätzen, Laserverdampfen oder andere Abtrageverfahren angewendet werden.

Je nach Geometrie der Segmente können diese entweder nur zu Mosaiken mit einer hohen Flächenbedeckung (runde Scheiben, Sechsecke, Quadrate, gleichseitige Dreiecke) angeordnet sein, oder untereinander eine mechanische Verzahnung aufweisen (z.B. Puzzel-Strukturen). Abhängig von dem Herstellungsverfahren für die einzelnen Segmente sind unterschiedliche Positionierungstechniken denkbar. Für die Segmente ohne mechanische Verzahnung können die Segmente ohne Ausrichtung zueinander auf einer ebenen Fläche (z.B. einem Metallband) verteilt werden und anschließend durch zusammenschieben der seitlichen Begrenzung ordnen sich die Segmente zu Strukturen mit einer hohen Flächenbedeckung an. Dieses Verfahren ist besonders bevorzugt für runde Scheiben und Sechsecke, da für die Ausrichtung der Segmente bezüglich des entstehenden Musters entweder keine Drehung (runde Scheiben) oder nur eine sehr geringe Drehung (Sechsecke die sich zu einem Bienenwabenmuster anordnen) notwendig ist. Für Segmente die mechanische miteinander verzahnen, sind Herstellungsverfahren bevorzugt, bei denen schon die Grünlinge richtig ausgerichtet und verzahnt hergestellt werden. Besonders bevorzugt ist hier das Ausstanzen der Segmente aus einer Grünlingsfolie.

Im Folgenden wir das Einbringen des elektrisch isolirenden Materials beschrieben.

Für die mechanisch verzahnten Segmente ist eine feste mechanische Verbindung des, die Zwischenräume ausfüllenden, elektrisch isolierenden Materials nicht zwingend notwendig, da eine Verschiebung der Segmente gegeneinander durch die mechanische Verzahnung verhindert wird. Daher bieten sich in solchen Fällen insbesondere Flüssigkeiten an. Die Flüssigkeit dient dabei auch zum Absperren des Katholytenraumes auf der einen Seite des Festkörperseparators und gegen den Anolytenraum auf der anderen Seite des Festkörperseparators. Damit der Ionendurchtritt vom, den Katholytenraum bzw. Anolytenraum füllenden Medium (in Kontakt mit den Festkörpersegmenten) nicht durch einen Flüssigkeitsfilm (Sperrflüssigkeit in den Zwischenräumen) behindert oder verhindert wird, darf die Flüssigkeit die (Glas)Keramik auf den Außenflächen, die mit dem Katholyten- bzw. Anolytenraum in Kontakt stehen, nicht benetzen. Auf der anderen Seite muss die Sperrflüssigkeit die schmalen Flächen der Segmente vollständig benetzen, um eine hermetische Trennung zwischen Anolyten- und Katholytenraum zu bewirken. Dies kann dadurch erreicht werden, indem die schmalen Flächen der Segmente dünn mit einem Feststofffilm beschichtet werden, der von der Sperrflüssigkeit vollständig benetzt wird. Die Beschichtung kann z.B. über einen Fotoresistlack erfolgen. In einem ersten Schritt werden die Segmente vollständig mit einem Lack dünn beschichtet (Tauchen, Sprühbeschichtung etc.) und anschließend die Flächen der Segmente belichtet. Da die schmalen Flächen der Segmente rechtwinklig zu den nicht zu beschichtenden Flächen stehen, fällt bei senkrechter Belichtung keine Strahlung auf die schmalen Flächen und die Lackbeschichtung bleibt bei der anschließenden Entwicklung des positiv Fotoresistlacks auf den schmalen Flächen erhalten. Die, den Anolyten- bzw Katholytenraum angrenzenden Flächen sind nach der Entwicklung unbeschichtet. Voraussetzung für die Verwendung von Sperrflüssigkeiten ist die nicht Benetzbarkeit der Flüssigkeit mit dem Festionenleiter und eine gute Benetzung mit der Lackschicht.

Das Polymer kann in einem Lösungsmittel gelöst sein und diese Lösung z.B. durch Rakeln in die Zwischenräume der angeordneten Segmente eingestrichen werden. Durch Verdunsten des Lösungsmittels wird das Polymer ausgeschieden, füllt die Zwischenräume der Segmente und verbindet dadurch diese. Der Prozess muss mehrfach wiederholt werden, da durch das Verdunsten des Lösungsmittels ein Volumenschwund eintritt und die Zwischenräume in einem Schritt nicht vollständig mit Polymer gefüllt werden. Statt Polymerlösungen können auch flüssige Polymer-Oligomere verwendet werden, die durch Polyaddition oder Polykondensation zum Polymer vernetzen.

Besonders vorteilhaft sind mechanisch verzahnten Geometrien, da sich die Segmente bei dem Rakelprozess nicht gegeneinander verschieben können. Segmente, die nicht mechanisch miteinander verzahnt sind, wie z.B. Bienenwabenstruktur, können auf einer Klebefolie fixiert werden (Trägerfolie), die nach dem Verfestigen des Polymers von der Oberfläche des Festkörperseparators abgezogen wird. Besonders Vorteilhaft ist dabei, dass die Oberfläche durch das Adhäsiv der Klebefolie vor einer ungewollten Beschichtung mit Polymer geschützt wird. Die gegenüberliegende Fläche wird durch den Prozess mit einem dünnen Polymerfilm belegt, der entfernt werden muss. Dies kann durch Auflösen mit einem Lösungsmittel (Herunterwaschen), mechanisch (z.B. Schleifen), über Ionenstrahlätzen oder Verdampfen mit einem Laser oder anderen abtragenden Verfahren erfolgen.

Alternativ kann die, der Trägerfolie gegenüberliegende, Oberfläche z.B. durch Bedrucken mit einem Schutzfilm versehen werden, der eine Benetzung mit der Polymerlösung / flüssigen Polymer-Oligomeren während des Rakelns verhindert. Dieser Schutzfilm wird nach Verfestigen des Polymers mit einem Lösungsmittel wieder entfernt.

## Patentansprüche

1. Festkörperseparator für elektrochemische Systeme, **dadurch gekennzeichnet, dass** der Festkörperseparator aus einer Vielzahl von ionenleitenden Festkörpersegmenten besteht, die miteinander verzahnt sind, und die einzelnen Festkörpersegmente mittels eines verformbaren, elektrisch isolierenden Materials verbunden sind.

2. Festkörperseparator nach Anspruch 1, **dadurch gekennzeichnet, dass** das verformbare, elektrisch isolierende Material entweder ein Klebstoff, ein Polymer, eine organische oder anorganische Flüssigkeit ist.

3. Festkörperseparator nach Anspruch 1 oder 2, **dadurch gekennzeichnet dass** das elektrisch isolierende Material ausgewählt ist aus der Gruppe bestehend aus Methylmethacrylat-Klebstoffen, strahlenhärtenden Klebstoffen, Phenol-Formaldehydharz-Klebstoffen, Silikonen, silanvernetzenden Polymerklebstoffen, Epoxidharz-Klebstoffen, Polyurethan-Klebstoffen, Imidazolium-Verbindungen, Pyridinium-Verbindungen, Piperidinium-Verbindungen, Tetraalkylammonium-Verbindungen und thermoplastischen Polymeren.

4. Festkörperseparator nach irgendeinem der vorhergehenden Ansprüche 1 bis 3, **dadurch gekennzeichnet, dass** die ionenleitenden Festkörpersegmente ausgewählt sind aus der Gruppe bestehend aus Keramiken, Glaskeramiken, polymeren Festelektrolyten, Einkristallen und Mischungen daraus.

5. Festkörperseparator nach irgendeinem der vorhergehenden Ansprüche 1 bis 4, **dadurch gekennzeichnet, dass** die ionenleitenden Festkörpersegmente einen mittleren Durchmesser von nicht mehr als 100 mm haben.

6. Festkörperseparator nach irgendeinem der vorhergehenden Ansprüche 1 bis 5, **dadurch gekennzeichnet, dass** die ionenleitenden Festkörpersegmente eine Dicke von nicht mehr als 1 mm haben.

7. Festkörperseparator nach irgendeinem der vorhergehenden Ansprüche 1 bis 6, **dadurch gekennzeichnet, dass** die ionenleitenden Festkörpersegmente rund, dreieckig, viereckig oder wabenförmig ausgebildet sind.

8. Festkörperseparator nach irgendeinem der vorhergehenden Ansprüche 1 bis 7, **dadurch gekennzeichnet, dass** das elektrisch isolierenden Material zwischen den Fugen der ionenleitenden Festkörpersegmente vorliegt.

9. Festkörperseparator nach irgendeinem der vorhergehenden Ansprüche 1 bis 8, **dadurch gekennzeichnet, dass** der Festkörperseparator eine Dicke von 1 bis 0,02 mm, eine Breite von 200 mm bis 2000 mm hat.

10. Festkörperseparator nach irgendeinem der vorhergehenden Ansprüche 1 bis 9, **dadurch gekennzeichnet, dass** das elektrisch isolierende Material nicht mehr als 50 Vol.-% des Festkörperseparators ausmacht.

11. Verwendung eines Festkörperseparators nach irgendeinem der vorhergehenden Ansprüche 1 bis 10, für den Einsatz in Vorrichtungen ausgewählt aus der Gruppe bestehend aus Sensoren, elektrochromen Systemen, Brennstoffzellen, primären Batteriezellen, sekundären Batteriezellen, Redox-Flow Systemen, elektrochemischen Synthesevorrichtungen und Elektrolyseuren.

12. Herstellung des Festkörperseparators nach irgendeinem der vorhergehenden Ansprüche 1 bis 10, umfassend die Schritte
(a) Herstellung der ionenleitenden Festkörpersegmente und
(b) Verbinden der ionenleitenden Festkörpersegmente mittels elektrisch isolierendem Material.

## Claims

1. Solid-state separator for electrochemical systems, **characterized in that** the solid-state separator consists of a plurality of ion-conducting solid-state segments which are intermeshed and the individual solid-state segments are joined by means of a deformable, electrically insulating material.

2. Solid-state separator according to Claim 1, **characterized in that** the deformable, electrically insulating material is either an adhesive, a polymer, an organic or inorganic liquid.

3. Solid-state separator according to Claim 1 or 2, **characterized in that** the electrically insulating material is selected from the group consisting of methyl methacrylate adhesives, radiation-curing adhesives, phenol formaldehyde resin adhesives, silicones, silane-crosslinking polymer adhesives, epoxy resin adhesives, polyurethane adhesives, imidazolium compounds, pyridinium compounds, piperidinium compounds, tetraalkylammonium compounds and thermoplastic polymers.

4. Solid-state separator according to any of the preceding Claims 1 to 3, **characterized in that** the ion-conducting solid-state segments are selected from the group consisting of ceramics, glass-ceramics, polymeric solid electrolytes, single crystals and mixtures thereof.

5. Solid-state separator according to any of the preceding Claims 1 to 4, **characterized in that** the ion-conducting solid-state segments have an average diameter of not more than 100 mm.

6. Solid-state separator according to any of the preceding Claims 1 to 5, **characterized in that** the ion-conducting solid-state segments have a thickness of not more than 1 mm.

7. Solid-state separator according to any of the preceding Claims 1 to 6, **characterized in that** the ion-conducting solid-state segments are round, triangular, quadrilateral or honeycomb-shaped.

8. Solid-state separator according to any of the preceding Claims 1 to 7, **characterized in that** the electrically insulating material is present between the joints of the ion-conducting solid-state segments.

9. Solid-state separator according to any of the preceding Claims 1 to 8, **characterized in that** the solid-state separator has a thickness of from 1 to 0.02 mm, a width of from 200 mm to 2000 mm.

10. Solid-state separator according to any of the preceding Claims 1 to 9, **characterized in that** the electrically insulating material makes up not more than 50% by volume of the solid-state separator.

11. Use of a solid-state separator according to any of the preceding Claims 1 to 10 for use in devices selected from the group consisting of sensors, electrochromic systems, fuel cells, primary battery cells, secondary battery cells, redox flow systems, electrochemical synthesis apparatuses and electrolysers.

12. Production of the solid-state separator according to any of the preceding Claims 1 to 10, which comprises the steps
(a) production of the ion-conducting solid-state segments and
(b) joining of the ion-conducting solid-state segments by means of electrically insulating material.

## Revendications

1. Séparateur solide pour systèmes électrochimiques, **caractérisé en ce que** le séparateur solide est constitué par une multitude de segments solides conducteurs d'ions, qui sont en prise les uns avec les autres et les différents segments solides sont reliés au moyen d'un matériau déformable, électriquement isolant.

2. Séparateur solide selon la revendication 1, **caractérisé en ce que** le matériau déformable, électriquement conducteur est un adhésif ou un polymère ou un liquide organique ou inorganique.

3. Séparateur solide selon la revendication 1 ou 2, **caractérisé en ce que** le matériau électriquement conducteur est choisi dans le groupe constitué par les adhésifs à base de méthacrylate de méthyle, les adhésifs durcissant sous l'effet de rayons, les adhésifs à base de phénolformaldéhyde, les silicones, les adhésifs à base de polymères réticulant par silane, les adhésifs à base de résine époxyde, les adhésifs à base de polyuréthane, les composés à base d'imidazolium, les composés à base de pyridinium, les composés à base de pipéridinium, les composés à base de tétraalkylammonium et les polymères thermoplastiques.

4. Séparateur solide selon l'une quelconque des revendications précédentes 1 à 3, **caractérisé en ce que** les segments solides conducteurs d'ions sont choisis dans le groupe constitué par les céramiques, les vitrocéramiques, les électrolytes solides polymères, les monocristaux et leurs mélanges.

5. Séparateur solide selon l'une quelconque des revendications précédentes 1 à 4, **caractérisé en ce que** les segments solides conducteurs d'ions présentent un diamètre moyen qui n'est pas supérieur à 100 mm.

6. Séparateur solide selon l'une quelconque des revendications précédentes 1 à 5, **caractérisé en ce que** les segments solides conducteurs d'ions présentent une épaisseur qui n'est pas supérieure à 1 mm.

7. Séparateur solide selon l'une quelconque des revendications précédentes 1 à 6, **caractérisé en ce que** les segments solides conducteurs d'ions sont réalisés sous forme ronde, triangulaire, quadrangulaire ou de nid d'abeille.

8. Séparateur solide selon l'une quelconque des revendications précédentes 1 à 7, **caractérisé en ce que** le matériau électriquement isolant se trouve entre les joints des segments solides conducteurs d'ions.

9. Séparateur solide selon l'une quelconque des revendications précédentes 1 à 8, **caractérisé en ce que** le séparateur solide présente une épaisseur de 1 mm à 0,02 mm et une largeur de 200 mm à 2000 mm.

10. Séparateur solide selon l'une quelconque des revendications précédentes 1 à 9, **caractérisé en ce que** le matériau électriquement isolant ne représente pas plus de 50% en volume du séparateur solide.

11. Utilisation d'un séparateur solide selon l'une quelconque des revendications précédentes 1 à 10, pour l'utilisation dans des dispositifs choisis dans le groupe constitué par les capteurs, les systèmes électrochromes, les piles à combustible, les éléments de batterie non rechargeables, les éléments de batterie rechargeables, les systèmes à flux redox, les dispositifs de synthèse électrochimiques et les électrolyseurs.

12. Fabrication du séparateur solide selon l'une quelconque des revendications précédentes 1 à 10, comprenant les étapes
(a) fabrication des segments solides conducteurs d'ions et
(b) liaison des segments solides conducteurs d'ions au moyen du matériau électriquement isolant.
